# EUROPEAN PATENT APPLICATION

(11) **EP 4 792 932 A1**
(43) Date of publication of application: **19.08.2026**
(21) Application number: 25158621.0
(22) Date of filing: 18.02.2025
(51) Int. Cl.: B01J 23/10, B01D 53/94, B01J 29/72

(54) **CATALYST**

(71) Applicant: Johnson Matthey Public Limited Company, London EC2V 7AD (GB)
(72) Inventor: CLARE, Jacob, Royston, SG8 5HE (GB); GREEN, Alexander Nicholas Michael, Royston, SG8 5HE (GB); HARRIS, Matthew Eben, Royston, SG8 5HE (GB)
(74) Representative: Johnson Matthey Public Limited Company

(57) **Abstract**

There is provided a catalyst article for treating an exhaust gas comprising NOₓ, the catalyst article comprising a catalyst composition disposed on a substrate, the catalyst composition comprising: a copper-loaded molecular sieve; and a binder comprising a cerium-doped aluminium hydroxide oxide and/or a cerium-doped alumina.

## Description

### FIELD OF THE INVENTION

The present invention relates to a catalyst article for treating an exhaust gas comprising NOₓ, a washcoat slurry for the manufacture of a catalyst article, an emission treatment system for treating an exhaust gas comprising NOₓ and a method of treating an exhaust gas comprising NOₓ.

### BACKGROUND OF THE INVENTION

Selective catalytic reduction (SCR) of NOₓ by nitrogenous compounds, such as ammonia or urea, has been used in many applications, including industrial stationary applications. More recently, NOₓ reduction systems based on SCR technology are being developed for several vehicular (mobile) applications in Europe, Japan, and the USA, e.g. for treating diesel exhaust gas.

Several chemical reactions occur in an NH₃ SCR system, most of which represent desirable reactions that reduce NOₓ, specifically NO and NO₂, to nitrogen. The dominant reaction is represented by reaction (1).

4NO + 4NH₃ + O₂ → 4N₂ + 6H₂O (1)

Competing, non-selective reactions with oxygen can produce secondary emissions or may unproductively consume ammonia. One such non-selective reaction is the complete oxidation of ammonia, shown in reaction (2).

4NH₃ + 5O₂ → 4NO + 6H₂O (2)

Also, side reactions may lead to undesirable products such as N₂O, as represented by reaction (3).

4NH₃ + 5NO + 3O₂ → N₂O + 6H₂O (3)

Molecular sieves, including aluminosilicate zeolites, may be used as catalysts for SCR of NOₓ with NH₃. One application is to control NOₓ emissions from vehicular diesel engines, with the reductant obtainable from an ammonia precursor such as urea or by injecting ammonia per se. To promote the catalytic activity, transition metals, such as copper and iron, may be incorporated into the aluminosilicate zeolites. These catalysts are usually supported by a substrate, such as a wall flow filter or flow-through monolith, and thus the preparation of a molecular sieve catalyst composition typically involves the use of one or more binders, such as alumina, silica, titania, ceria, and zirconia. A binder may enhance adhesion of the catalyst material to its carrier surface.

It is desired to prepare a catalyst composition for SCR of NOₓ with improved NOₓ conversion and reduced N₂O production. WO2013079954A1 describes bimetallic transition metal/cerium catalysts for selective catalytic reduction. The catalysts comprise a molecular sieve, such as a small pore zeolite, comprising exchanged transition metal (typically copper) and exchanged cerium. The catalysts have been found to promote the reaction of NH₃ with NOₓ to form nitrogen and water, i.e. selective catalytic reduction (SCR), with low N₂O production.

The present invention seeks to tackle at least some of the problems associated with the prior art, or at least to provide a commercially acceptable alternative solution thereto.

### SUMMARY OF THE INVENTION

In a first aspect, the present invention provides a catalyst article for treating an exhaust gas comprising NOₓ, the catalyst article comprising a catalyst composition disposed on a substrate, the catalyst composition comprising:
a copper-loaded molecular sieve; and
a binder comprising a cerium-doped aluminium hydroxide oxide and/or a cerium-doped alumina.

In a further aspect, the present invention provides a washcoat slurry for the manufacture of a catalyst article for treating an exhaust gas comprising NOₓ, the washcoat slurry comprising:
a copper-loaded molecular sieve;
a binder comprising a cerium-doped aluminium hydroxide oxide and/or a cerium-doped alumina; and
water.

In a further aspect, the present invention provides method of manufacturing a catalyst article for treating an exhaust gas comprising NOₓ, the method comprising:
providing the washcoat slurry described herein; and
coating the washcoat slurry on a substrate to provide a coated substrate.

In a further aspect, the present invention provides an emission treatment system for treating an exhaust gas comprising NOₓ, wherein the emission treatment system comprises the catalyst article as described herein.

In a further aspect, the present invention provides a method of treating an exhaust gas comprising NOₓ, the method comprising:
providing the catalyst article as described herein or the emission treatment system as described herein; and
contacting the exhaust gas with the catalyst article.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

### BRIEF DESCRIPTION OF THE DRAWINGS

**FIG. 1** shows a plot of NOₓ conversion versus temperature for several fresh catalyst compositions.
**FIG. 2** shows a plot of N₂O slip versus temperature for several fresh catalyst compositions.
**FIG. 3** shows a plot of NOₓ conversion versus temperature for several aged catalyst compositions.
**FIG. 4** shows a plot of N₂O slip versus temperature for several aged catalyst compositions.
**FIG. 5** shows a plot of fresh to aged delta for NOx conversion for several catalyst compositions.

### DETAILED DESCRIPTION OF THE INVENTION

In a first aspect, the present invention provides a provides a catalyst article for treating an exhaust gas comprising NOₓ, the catalyst article comprising a catalyst composition disposed on a substrate, the catalyst composition comprising:
a copper-loaded molecular sieve; and
a binder comprising a cerium-doped aluminium hydroxide oxide and/or a cerium-doped alumina.

The inventors have surprisingly found that the catalyst composition may promote the reaction of NH₃ with NOₓ to form nitrogen and water, i.e. selective catalytic reduction (SCR), with low N₂O production. As a result, an emission treatment system employing the catalyst article may undergo SCR more efficiently.

The level of SCR promotion, and the low level of N₂O production, may be similar to, or even superior to, that of the catalyst described in WO2013079954A1. It is not fully understood exactly how the cerium in the catalyst of WO2013079954A1 reduces N₂O production. It is therefore surprising that the catalytic performance may be maintained, or even improved, by incorporating the cerium into the binder rather than into the molecular sieve. In the catalyst article of the present invention, by introducing cerium into the binder rather than into the molecular sieve, the flexibility of the design of the catalyst article may be improved.

Advantageously, the level of SCR promotion, and the low level of N₂O production, may be substantially maintained following aging, for example aging at a temperature of 650 °C for 50 hours.

The term "article" or "catalyst article" as used herein may encompass an article in which a catalyst is supported thereon or therein. The article may take the form of, for example, a honeycomb monolith, such as a flow-through monolith, or a filter, such as a wall flow filter.

The catalyst article is suitable for treating an exhaust gas comprising NOₓ. The exhaust gas may be from a stationary industrial application but is typically a vehicular exhaust gas, more typically an exhaust gas from a diesel engine.

The catalyst composition is disposed on a substrate. The term "disposed on" as used herein may encompass the catalyst composition being on and/or in the substrate. For example, the catalyst composition may be disposed on a surface of the substrate, for example a surface of a channel wall. When the substrate is porous, the catalyst composition may be disposed within the pores of the substrate. The catalyst composition may be directly disposed on the substrate or may be indirectly disposed on the substrate, for example via a carrier or support material. The catalyst composition may be disposed on the substrate in the form of one or more layers. The one or more layers may be continuous layers or discontinuous layers. The one or more layers may be directly in contact with the substrate. Alternatively, the one or more layers may be separated from the substrate by layers of another composition, for example another catalyst composition.

The substrate is preferably a ceramic substrate or a metallic substrate. The ceramic substrate may include any suitable refractory material, e.g., alumina, silica, titania, ceria, zirconia, magnesia, zeolites, silicon nitride, silicon carbide, zirconium silicates, magnesium silicates, aluminosilicates, metallo-aluminosilicates (such as cordierite and spudomene), or a mixture or mixed oxide of any two or more thereof. Cordierite, a magnesium aluminosilicate, and silicon carbide are particularly preferred. The metallic substrates may be made of any suitable metal, and in particular heat-resistant metals and metal alloys such as titanium and stainless steel as well as ferritic alloys containing iron, nickel, chromium, and/or aluminium in addition to other trace metals. The catalyst composition may be disposed along the entire length of the substrate, or only part of the length of the substrate. In other words, the catalyst composition may coat the substrate entirely or partially, as desired.

As discussed in more detail below, the substrate may be a flow through substrate or a filtering substrate, such as a wall flow filter. When the substrate is a filtering substrate, the catalyst article is a selective catalytic reduction filter (SCRF) catalyst.

The catalyst composition may be added to the substrate by any known means, such as a washcoat procedure.

The catalyst composition comprises a copper-loaded molecular sieve. The term "loaded" as used herein may encompass the molecular sieve containing copper. The copper may be supported on the molecular sieve but more typically the copper is ion exchanged within the molecular sieve. In other words, the copper-loaded molecular sieve may be a copper-exchanged molecular sieve. The copper may be present on an extra-framework site on the external surface of the molecular sieve or within a channel, cavity or cage of the molecular sieve.

The copper-loaded molecular sieve is typically free of, or essentially free of, any additional transition metals, i.e. transition metals other than copper. For example, the molecular sieve typically contains additional transition metals in an amount less than about 1 wt.%, less than about 0.7 wt.%; less than about 0.5 wt.%; less than about 0.3 wt.%; less than about 0.1 wt.%; less than about 0.07 wt.%; less than about 0.05 wt.%; or less than about 0.01 wt.%, based on the weight of the molecular sieve. Alternatively, the copper-loaded molecular sieve may be loaded with additional metals, such as transition metals. The additional metals may be selected from the group consisting of manganese, cerium, titanium, cobalt, iron, nickel, vanadium, palladium, platinum, ruthenium and rhenium, preferably manganese, cerium or titanium, more preferably manganese. In some aspects, copper and manganese are the only metals loaded on and/or in the molecular sieve. In some aspects, copper and cerium are the only metals loaded on and/or in the molecular sieve. In some aspects, copper and titanium are the only metals loaded on and/or in the molecular sieve. In some aspects, the additional metals do not include iron. In some aspects, the additional metals do not include vanadium. In some aspects, the additional metals do not include ruthenium. In some aspects, the additional metals do not include nickel. In some aspects, the additional metals do not include cerium.

The catalyst composition comprises a binder. The binder may enable the catalyst composition to be applied to the substrate in the form of a washcoat. The catalyst composition may be in the form of a washcoat. The term "washcoat" as used herein may encompass an adherent coating that is applied to a substrate.

The binder comprises a cerium-doped aluminium hydroxide oxide and/or a cerium-doped alumina. The term "doped" as used herein may encompass the aluminium hydroxide oxide and/or the alumina containing cerium. The doping typically occurs via ion exchange. In other words, the cerium-doped aluminium hydroxide oxide and/or a cerium-doped alumina may comprise a cerium-exchanged aluminium hydroxide oxide and/or a cerium-exchanged alumina. The doping may be carried out using known doping techniques, for example using a pre-fixing technique, a spray drying technique, or an incipient wetness impregnation technique.

The binder preferably comprises at least 50 wt.% of the cerium-doped aluminium hydroxide oxide and the cerium-doped alumina, based on the total weight of the binder, more preferably at least 75 wt.%, even more preferably at least 90 wt.%, still even more preferably at least 95 wt.%, still even more preferably at least 98 wt.%. In other words, preferably the cerium-doped aluminium hydroxide oxide and the cerium-doped alumina account for at least 50 wt.% of the total weight of the binder, more preferably at least 75 wt.%, even more preferably at least 90 wt.%, still even more preferably at least 95 wt.%, still even more preferably at least 98 wt.%. In some embodiments, the cerium-doped aluminium hydroxide oxide or cerium-doped alumina are doped with additional dopants selected from neodymium and/or lanthanum. This may increase durability, in particular when the catalyst composition is disposed on a wall flow filter. The additional dopants can each be present in an amount of from 2 to 6 wt.%, preferably from 3 to 5 wt.%, based on the weight of the binder. The binder preferably consists of, or consists essentially of, the cerium-doped aluminium hydroxide oxide and/or the cerium-doped alumina. By "consist essentially of", it is meant that specific further components can be present, namely those not materially affecting the essential characteristics of the binder. However, the binder may comprise other species such as, for example, one or more of zirconia, non-cerium-doped alumina, silica, non-zeolitic silica-alumina, naturally occurring clays, titania, and cassiterite (SnO₂).

The catalyst composition may further comprise a rheology modifier. A rheology modifier may comprise one or more of a thickener (e.g., a cellulose based thickener, a xanthan gum based thickener, a polymer based thickener, preferably a cellulose based thickener), a base (e.g., ammonium carbonate, ammonia, trimethylamine, methylamine, ammonium hydroxide etc), and/or an acid (e.g. acetic acid, nitric acid, formic acid).

The binder preferably comprises a cerium-doped aluminium hydroxide oxide. This may be particularly advantageous when the catalyst article is intended for unfiltered SCR applications, e.g. when the substrate comprises a flow-through substrate. The aluminium hydroxide oxide preferably comprises one or both of boehmite and diaspore, more preferably boehmite. Boehmite and diaspore are particularly suitable as binders, in particular for unfiltered SCR applications. Boehmite is a water dispersible aluminium hydroxide oxide. The boehmite may be acid stabilised or non-acid stabilised, but is preferably acid stabilised. The acid used to stabilise the boehmite may comprise, for example, one or more of formic acid, nitric acid and acetic acid, but preferably comprises formic acid. Diaspore is an aluminium hydroxide oxide mineral, α-AlO(OH), crystallizing in the orthorhombic system. Diaspore is sometimes referred to as diasporite, empholite, kayserite, or tanatarite.

The binder preferably comprises a cerium-doped alumina. This may be particularly advantageous when the catalyst article is intended for filtered SCR applications, e.g. when the substrate comprises a filter substrate such as, for example, a wall flow filter. The alumina preferably comprises one or more of alpha alumina, theta alumina and gamma alumina, more preferably gamma alumina. Such forms of alumina are particularly suitable binders, in particular for filtered SCR (SCRF) applications.

The binder preferably comprises a cerium-doped aluminium hydroxide oxide and the aluminium hydroxide oxide preferably comprises boehmite. Preferably, the binder comprises at least 50 wt.% cerium-doped aluminium hydroxide oxide based on the total weight of the binder, more preferably at least 75 wt.%, even more preferably at least 90 wt.%, still even more preferably at least 95 wt.%, still even more preferably at least 98 wt.%. In other words, preferably the cerium-doped aluminium hydroxide oxide accounts for at least 50 wt.% of the total weight of the binder, more preferably at least 75 wt.%, even more preferably at least 90 wt.%, still even more preferably at least 95 wt.%, still even more preferably at least 98 wt.%. The binder preferably consists of a cerium-doped aluminium hydroxide oxide. Preferably, the aluminium hydroxide oxide comprises at least 50 wt.% boehmite based on the total weight of the aluminium hydroxide oxide, more preferably at least 75 wt.%, even more preferably at least 90 wt.%, still even more preferably at least 95 wt.%, still even more preferably at least 98 wt.%. The aluminium hydroxide oxide preferably is boehmite.

The cerium-doped aluminium hydroxide oxide and/or the cerium-doped alumina preferably comprises from 2 to 30 wt.% cerium, based on the weight of the aluminium hydroxide oxide and the alumina (in other words, based on the weight of the aluminium hydroxide oxide and the alumina that is doped with the cerium), more preferably from 5 to 25 wt%, even more preferably from 5 to 18 wt.%, even more preferably from 6 to 16 wt.%. In a particularly preferred embodiment, the cerium-doped aluminium hydroxide oxide and/or the cerium-doped alumina comprises from about 6 to 25 wt% cerium. Such cerium levels may result in particularly pronounced NOₓ conversion and/or particularly low levels of N₂O production.

In one embodiment, the cerium-doped aluminium hydroxide oxide and/or the cerium-doped alumina preferably comprises from 20 to 30 wt.% cerium when the zeolite has a silica to alumina ratio (SAR) of from 10 to 25, e.g. from 11 to 20 or from 12 to 15. In a further embodiment, the cerium-doped aluminium hydroxide oxide and/or the cerium-doped alumina preferably comprises from 10 to 20 wt.% cerium when the zeolite has a silica to alumina ratio (SAR) of from 15 to 30, e.g. from 10 to 20. In a further embodiment, the cerium-doped aluminium hydroxide oxide and/or the cerium-doped alumina preferably comprises from 5 to 10 wt.% cerium when the zeolite has a silica to alumina ratio (SAR) of from 20 to 40, e.g. from 20 to 30.

Typically, the molecular sieve is microporous. A microporous molecular sieve has pores with a diameter of less than 2 nm (e.g. in accordance with the IUPAC definition of "microporous" [see Pure & Appl. Chem., 66(8), (1994), 1739-1758)]).

The molecular sieve may comprise a molecular sieve having an aluminosilicate framework (e.g. zeolite) or a silicoaluminophosphate framework (e.g. SAPO). The molecular sieve preferably comprises a zeolite. The term "zeolite" as used herein may encompass a microporous, crystalline aluminosilicate material having the general formula Mⁿ⁺_{l/n}(AlO₂)⁻(SiO₂)ₓ ▪yH₂O where Mⁿ⁺_{l/n} is either a metal ion or H⁺.

The molecular sieve may comprise a small pore zeolite, a medium pore zeolite and/or a large pore zeolite. Preferably, the molecular sieve comprises a small-pore zeolite. The term "small pore zeolite" as used herein may encompass a zeolite having a maximum ring size of eight tetrahedral atoms. The small pore zeolite may have a framework structure represented by a Framework Type Code (FTC) selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, M ER, MON, NSI, OWE, PAU, PHI, RHO, RTH, SAT, SAV, SFW, SIV, THO, TSC, UEI, UFI, VNI, YUG and ZON, or a mixture and/or combination and/or an intergrowth of two or more thereof. Preferably the molecular sieve comprises a zeolite having a CHA Framework Type or an AEI Framework Type, more preferably a CHA Framework Type. Such molecular sieves may result in particularly pronounced NOₓ conversion and/or particularly low levels of N₂O production.

As noted above, the molecular sieve may comprise a medium pore zeolite. The term "medium pore zeolite" as used herein may encompass a zeolite having a maximum ring size of ten tetrahedral atoms. The medium pore zeolite may have a framework structure represented by a Framework Type Code (FTC) selected from the group consisting of AEL, AFO, AHT, BOF, BOZ, CGF, CGS, CHI, DAC, EUO, FER, HEU, IMF, ITH, ITR, JRY, JSR, JST, LAU, LOV, M EL, MFI, MFS, M RE, MTT, MVY, MWW, NAB, NAT, NES, OBW, PAR, PCR, PON, PUN, RRO, RSN, SFF, SFG, STF, STI, STT, STW, SVR, SZR, TER, TON, TUN, UOS, VSV, WEI and WEN, or a mixture and/or an intergrowth of two or more thereof. The medium pore zeolite preferably has a framework structure represented by a FER or MFI FTC.

As noted above, the molecular sieve may comprise a large pore zeolite. The term "large pore zeolite as used herein may encompass a zeolite having a maximum ring size of twelve tetrahedral atoms. The large pore zeolite may have a framework structure represented by a Framework Type Code (FTC) selected from the group consisting of AFI, AFR, AFS, AFY, ASV, ATO, ATS, BEA, BEC, BOG, BPH, BSV, CAN, CON, CZP, DFO, EMT, EON, EZT, FAU, GM E, GON, IFR, ISV, ITG, IWR, IWS, IWV, IWW, JSR, LTF, LTL, MAZ, MEI, MOR, MOZ, MSE, MTW, NPO, OFF, OKO, OSI, RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. The large pore zeolite preferably has a framework structure represented by a BEA FTC.

The zeolite preferably has a silica to alumina molar ratio (SAR) of from 10 to 30, more preferably from 12 to 26. In a preferred embodiment, the zeolite has a SAR of 13.5. In another preferred embodiment, the zeolite has a SAR of 19. In another preferred embodiment, the zeolite has a SAR of 25.

The copper-loaded molecular sieve preferably comprises from 1 to 10 wt.% copper, based on the weight of the molecular sieve, more preferably from 2 to 6 wt.%. In a preferred embodiment, the copper-loaded molecular sieve comprises about 4 wt.% of copper. Such copper loading levels may result in particularly pronounced NOₓ conversion and/or particularly low levels of N₂O production. The wt.% of copper in the copper-loaded molecular sieve is based on the weight of the molecular sieve. For the avoidance of doubt, the wt.% of copper in the copper-loaded molecular sieve is not based on the total weight of the copper-loaded molecular sieve, i.e. it does not include the weight of the copper.

The ratio by weight of the copper-loaded molecular sieve to the total weight of the cerium-doped aluminium hydroxide oxide and the cerium-doped alumina is preferably from 2 to 15, more preferably from 3 to 10, even more preferably from 5 to 8. The catalyst composition preferably comprises from 1 to 25 wt.% binder based on the total weight of the copper-loaded molecular sieve, more preferably from 5 to 20 wt.% binder, more preferably from 10 to 15 wt.% binder.

The catalyst article preferably comprises from 90 to 190 g/ft³ of the copper of the copper-loaded molecular sieve, based on the total volume of the substrate, more preferably from 95 to 170 g/ft³. The catalyst article preferably comprises from 0.1 to 5 g/in³ of the copper-loaded molecular sieve, based on the total volume of the substrate. The catalyst article preferably comprises from 0.1 to 0.5 g/in³ of the binder, based on the total volume of the substrate. The catalyst article preferably comprises from 1 to 4 g/in³ of the total copper-loaded molecular sieve and binder, based on the total volume of the substrate.

The catalyst composition preferably has a D90 of from 2 to 12 µm, more preferably from 2.5 to 11 µm or 2.5 to 10 µm, even more preferably from 6 to 11 µm, still even more preferably from 7 to 10 µm. In some embodiments, the catalyst composition has a D90 is from 2 to 8 µm. In another embodiment, the catalyst composition has a D90 of from 7 to 10 µm. The term "D90" as used herein may encompass the point in the size distribution, up to and including which, 90% of the total volume of material in the sample is 'contained'. The D90 may be measured using a dynamic light scattering method.

The substrate preferably comprises a flow-through monolith or a wall flow filter. When the substrate comprises a flow-through monolith, the binder preferably comprises a cerium-doped aluminium hydroxide oxide, more preferably cerium-doped boehmite. Boehmite may exhibit a high durability. When the substrate comprises a wall flow filter, the binder preferably comprises a cerium-doped alumina, preferably cerium-doped gamma alumina. In order to sufficiently coat a wall flow filter with a catalyst composition, i.e. to ensure that the catalyst composition can enter the channels and channel walls, a washcoat slurry of the catalyst composition is required to have a low viscosity, typically close to that of water. Such types of alumina may be particularly suitable for providing such a viscosity. The viscosity of the washcoat slurry is less of an issue when coating a flow-through monolith.

The flow-through monolith may have a honeycomb structure with many small, parallel thin-walled channels running axially through the substrate and extending throughout from an inlet or an outlet of the substrate. The channel cross-section of the substrate may be any shape, but is preferably square, sinusoidal, triangular, rectangular, hexagonal, trapezoidal, circular, or oval. The flow-through substrate may also be high porosity which allows the catalyst to penetrate into the substrate walls.

The wall flow filter may have a structure in which channels are alternately blocked, which allow the exhaust gas stream to enter a channel from the inlet, then flow through the channel walls, and exit the filter from a different channel leading to the outlet. Particulates in the exhaust gas stream are thus trapped in the filter. The wall flow filter preferably has a cell density of from 60 to 400 cells per square inch (cpsi), more preferably from 100 to 350 cpsi, even more preferably from 200 to 300 cpsi. The wall flow filter may have a wall thickness (e.g. average internal wall thickness) of from 0.20 to 0.50 mm, more preferably 0.25 to 0.35 mm (e.g. about 0.30 mm). The uncoated wall flow filter preferably has a porosity of from 50 to 80 %, more preferably from 55 to 75 %, even more preferably from 60 to 70 %. The uncoated wall flow filter preferably has a mean pore size of at least 5 pm, more preferably from 10 to 40 pm, even more preferably from 15 to 35 pm, still even more preferably from 20 to 30 pm. The wall flow filter may have a symmetric cell design or an asymmetric cell design. In general, for a selective catalytic reduction filter, the catalyst composition is disposed within the wall of the wall-flow filter. Additionally, the catalyst composition may be disposed on the walls of the inlet channels and/or on the walls of the outlet channels.

The catalyst article is preferably an SCR catalyst article. As discussed above, the catalyst article is particularly suitable for SCR applications.

In a further aspect, the present invention provides a washcoat slurry for the manufacture of a catalyst article for treating an exhaust gas comprising NOₓ, the washcoat slurry comprising:
a copper-loaded molecular sieve;
a binder comprising a cerium-doped aluminium hydroxide oxide and/or a cerium-doped alumina; and
water.

The advantages and preferable features of the first aspect apply equally to this aspect.

The washcoat slurry may be suitable for manufacturing the catalyst article of the first aspect. For the avoidance of doubt, the advantages and preferable features of the copper-loaded molecular sieve and the binder described in relation to the first aspect apply equally to the copper-loaded molecular sieve and the binder of this aspect. The washcoat slurry typically has a solids content of, for example, from 20 to 40 wt.%, more preferably from 25 to 35 wt.%, even more preferably about 32 wt.%. The slurry is typically acidic, i.e. has a pH of less than 7. The copper-loaded molecular sieve and binder are typically suspended in the water.

In a further aspect, the present invention provides a method of manufacturing a catalyst article for treating an exhaust gas comprising NOₓ, the method comprising:
providing the washcoat slurry as described herein; and
coating the washcoat slurry on a substrate to provide a coated substrate.

The advantages and preferable features of the earlier aspects apply equally to this aspect.

The method may be used to manufacture the catalyst article of the first aspect.

Coating the washcoat slurry on a substrate may comprise dipping the substrate in the washcoat slurry. Typically, the coating is carried out from both ends of the substrate. For example, when the substrate comprises a flow-through monolith or a wall flow filter, one end (i.e. an inlet end or an outlet end) of the substrate is dipped in the washcoat slurry followed by the other end. After each dipping step, a vacuum and/or air knife may be applied to the substrate to increase the uniformity of the coating.

The coated substrate is typically dried, for example by the application of heat and/or a vacuum. Such drying may reduce or eliminate the water content of the washcoat slurry.

The method preferably further comprises heating the coated substrate at a temperature of from 400 to 600 °C for from 5 to 200 minutes. Such heating typically results in calcination of the washcoat slurry, typically to form a washcoat. The heating step is typically carried out after the drying step.

In a further aspect, the present invention provides a catalyst article manufactured using the method described herein.

The advantages and preferable features of the earlier aspects apply equally to this aspect.

In a further aspect, the present invention provides an emission treatment system for treating an exhaust gas comprising NOₓ, wherein the emission treatment system comprises the catalyst article described herein.

The advantages and preferable features of the earlier aspects apply equally to this aspect.

The emission treatment system is preferably for a vehicular internal combustion engine, more preferably a lean burn internal combustion engine, even more preferably a diesel engine.

The emission treatment system may further comprise a source of nitrogenous reductant. The system may be arranged such that a conduit directs exhaust gas to the catalyst article. The system may comprise means for metering nitrogenous reductant into the exhaust gas upstream of the catalyst article.

An oxidation catalyst for oxidizing nitrogen monoxide in the exhaust gas to nitrogen dioxide may be located upstream of a point of metering the nitrogenous reductant into the exhaust gas. The oxidation catalyst may be adapted to yield a gas stream entering the SCR catalyst composition having a ratio of NO to NO₂ of from about 4:1 to about 1:3 by volume, e.g. at an exhaust gas temperature at oxidation catalyst inlet of 200 °C to 450 °C; or 250 °C to 450 °C. This concept is disclosed in S. Kasaoka et al. "Effect of Inlet NO/NO2 Molar Ratio and Contribution of Oxygen in the Catalytic Reduction of Nitrogen Oxides with Ammonia", Nippon Kagaku Kaishi, 1978, No. 6, pp. 874-881 and WO 99/39809, the contents of which are hereby incorporated by reference. The oxidation catalyst may include at least one platinum group metal (or some combination of these), such as platinum, palladium or rhodium, coated on a flow-through monolith substrate. The at least one platinum group metal may be platinum, palladium or a combination of both platinum and palladium. The platinum group metal may be supported on a high surface area washcoat component such as alumina, a zeolite such as an aluminosilicate zeolite, silica, non-zeolite silica alumina, ceria, zirconia, titania or a mixed or composite oxide containing both ceria and zirconia.

An ammonia oxidation catalyst may be located downstream of the catalyst article. The ammonia oxidation catalyst may function as an ammonia slip catalyst. The ammonia oxidation catalyst may comprise the at least one platinum group metal.

In a further aspect, the present invention provides a method of treating an exhaust gas comprising NOₓ, the method comprising:
providing the catalyst article as described herein or the emission treatment system as described herein; and
contacting the exhaust gas with the catalyst article.

The advantages and preferable features of the earlier aspects apply equally to this aspect.

The method preferably further comprises introducing a reductant, preferably a nitrogenous reductant (such as ammonia) or hydrocarbon reductant, into the exhaust gas prior to contacting the exhaust gas with the catalyst article. As such, the method may be a selective catalytic reduction (SCR) method.

The nitrogenous reductant may be ammonia *per se* or the source of nitrogenous reductant can be hydrazine or any suitable ammonia precursor, such as urea, ammonium carbonate, ammonium carbamate, ammonium hydrogen carbonate or ammonium formate.

The reductant can be injected into the exhaust gas stream from an external source, such as reservoir or tank, supplied in-situ by a Nitrogen Storage Catalyst or NOx Adsorber Catalyst, or a combination of both.

Contacting the exhaust gas with the catalyst article is preferably carried out at a temperature of from 150 °C to 750 °C, more preferably from 175 °C to 600 °C, even more preferably from 200 °C to 550 °C.

The exhaust gas is preferably from a vehicular lean burn internal combustion engine, more preferably a diesel engine.

### EXAMPLES

The invention will now be further described with reference to the following examples.

### Example preparation

Catalysts were prepared having the following formulations:
Catalyst A comprised a copper ion-exchanged aluminosilicate zeolite CHA and a boehmite binder.
Catalyst B comprised a copper ion-exchanged aluminosilicate zeolite CHA and a 7.5 wt.% Ce doped boehmite binder.
Catalyst C comprised a copper ion-exchanged aluminosilicate zeolite CHA and a 10 wt.% Ce doped boehmite binder.
Catalyst D comprised a copper ion-exchanged aluminosilicate zeolite CHA and a 15 wt.% Ce doped boehmite binder.

A flow-through honeycomb core (3.0 inches, 400 cpsi, 4 mil wall thickness) was coated with Catalyst A, B, C or D from both inlet and outlet and coated so there is no gap. The catalyst was coated over the substrate so that the substrate was completely covered and was dried and calcined.

### SCAT Data

1×3" cores were cut from the prepared catalyst of Catalysts A-D and used fresh or aged at 650 °C for 50 hours in an atmosphere of 10 % water, 10 % oxygen, nitrogen balance before being tested for NOx conversion and N₂O selectivity using a series of steady state points at increasing temperatures in 1000 ppm NO at 60 k SV and NH₃ at 1100ppm.

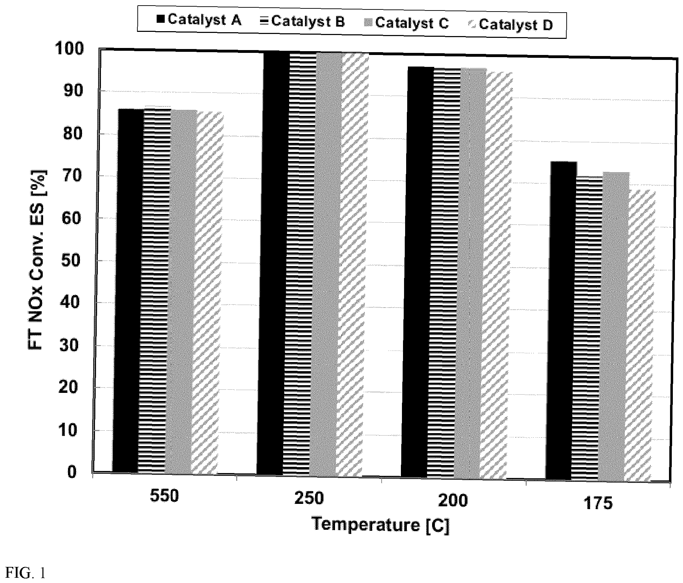

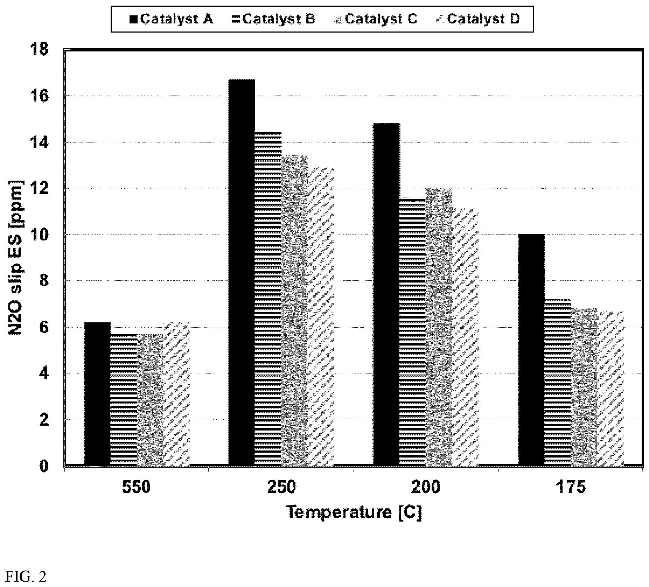

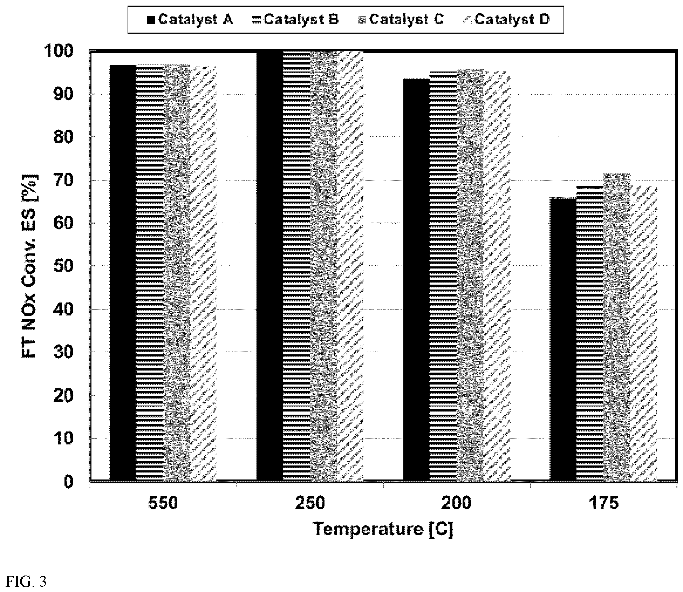

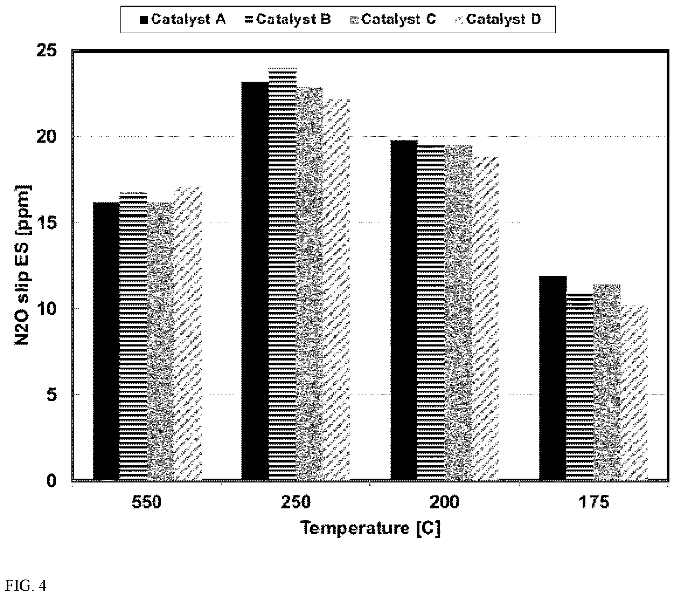

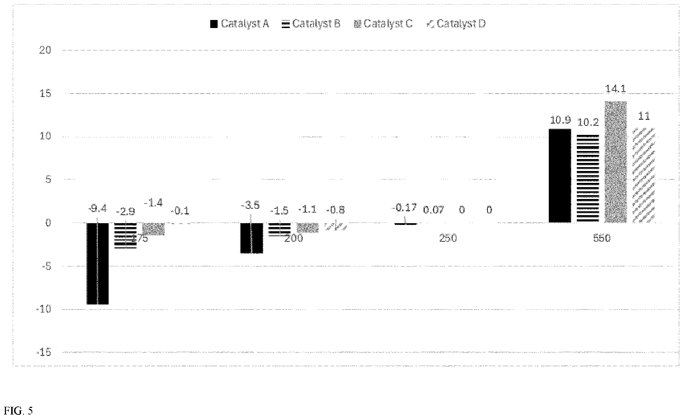

The results are summarised in the below tables and the plots of FIGS 1-5:

### Fresh to aged delta for NOx conversion:

| Catalyst | Δ NOx at 175 °C | Δ NOx at 200 °C | Δ NOx at 250 °C | Δ NOx at 550 °C |
|---|---|---|---|---|
| A | 9.4 | 3.4 | 0.2 | 10.9 |
| B | 2.9 | 2.6 | 0 | 10.2 |
| C | 1.4 | 1.1 | 0 | 11.1 |
| D | 0.1 | 0.8 | 0.1 | 11.0 |

The results show that increasing the Ce content in the binder improves the fresh to aged delta for NOx conversion, particularly at low temperatures.

### Fresh data:

| Catalyst | N₂O slip (ppm) at 175 °C | N₂O slip (ppm) at 200 °C | N₂O slip (ppm) at 250 °C | N₂O slip (ppm) at 550 °C |
|---|---|---|---|---|
| A | 10.0 | 14.8 | 16.7 | 6.2 |
| B | 7.2 | 11.6 | 14.5 | 5.7 |
| C | 6.8 | 12 | 13.4 | 5.7 |
| D | 6.7 | 11.1 | 12.9 | 6.2 |

The results show that there is a N₂O benefit with increasing amounts of ceria in the binder, particularly at low temperatures.

### Aged data:

| Catalyst | N₂O slip (ppm) at 175 °C | N₂O slip (ppm) at 200 °C | N₂O slip (ppm) at 250 °C | N₂O slip (ppm) at 550 °C |
|---|---|---|---|---|
| A | 11.9 | 19.8 | 23.2 | 16.2 |
| B | 11.0 | 19.5 | 24 | 16.7 |
| C | 11.4 | 19.5 | 22.9 | 16.2 |
| D | 10.2 | 18.8 | 22.2 | 17.1 |

The results show that the N₂O benefit observed in the fresh data is not as prominent after aging.

The foregoing detailed description has been provided by way of explanation and illustration and is not intended to limit the scope of the appended claims. Many variations in the presently preferred embodiments illustrated herein will be apparent to one of ordinary skill in the art, and remain within the scope of the appended claims and their equivalents.

## Claims

1. A catalyst article for treating an exhaust gas comprising NOₓ, the catalyst article comprising a catalyst composition disposed on a substrate, the catalyst composition comprising:
a copper-loaded molecular sieve; and
a binder comprising a cerium-doped aluminium hydroxide oxide and/or a cerium-doped alumina.

2. The catalyst article of claim 1, wherein:
the aluminium hydroxide oxide comprises one or both of boehmite and diaspore, preferably boehmite; and/or
the alumina comprises one or more of alpha alumina, theta alumina and gamma alumina, preferably gamma alumina.

3. The catalyst article of claim 1 or claim 2, wherein the binder comprises a cerium-doped aluminium hydroxide oxide and the aluminium hydroxide oxide comprises boehmite.

4. The catalyst article of any preceding claim, wherein the cerium-doped aluminium hydroxide oxide and/or the cerium-doped alumina comprises from 2 to 20 wt.% cerium, based on the weight of the aluminium hydroxide oxide and the alumina, preferably from 5 to 18 wt.%, more preferably from 6 to 16 wt.%.

5. The catalyst article of any preceding claim, wherein the molecular sieve comprises a zeolite, preferably wherein the molecular sieve comprises a small-pore zeolite, more preferably wherein the molecular sieve comprises a zeolite having a CHA Framework Type or an AEI Framework Type, even more preferably a CHA Framework Type.

6. The catalyst article of any preceding claim, wherein the copper-loaded molecular sieve comprises from 1 to 10 wt.% copper, based on the weight of the molecular sieve, preferably from 2 to 6 wt.%.

7. The catalyst article of any preceding claim, wherein the ratio by weight of the copper-loaded molecular sieve to the total weight of the cerium-doped aluminium hydroxide oxide and the cerium-doped alumina is from 2 to 15, preferably from 3 to 10, more preferably from 5 to 8.

8. The catalyst article of any preceding claim, wherein the catalyst article comprises:
from 90 to 190 g/ft³ of the copper of the copper-loaded molecular sieve, and/or
from 0.1 to 5 g/in³ of the copper-loaded molecular sieve, and/or
from 0.1 to 0.5 g/in³ of the binder, and/or
from 1 to 4 g/in³ of the total copper-loaded molecular sieve and binder,
based on the total volume of the substrate.

9. The catalyst article of any preceding claim, wherein the substrate comprises a flow-through monolith or a wall-flow filter.

10. The catalyst article of any preceding claim, wherein the catalyst article is an SCR catalyst article.

11. A washcoat slurry for the manufacture of a catalyst article for treating an exhaust gas comprising NOₓ, the washcoat slurry comprising:
a copper-loaded molecular sieve;
a binder comprising a cerium-doped aluminium hydroxide oxide and/or a cerium-doped alumina; and
water.

12. A method of manufacturing a catalyst article for treating an exhaust gas comprising NOₓ, the method comprising:
providing the washcoat slurry of claim 11; and
coating the washcoat slurry on a substrate to provide a coated substrate.

13. The method of claim 12, further comprising heating the coated substrate at a temperature of from 400 to 600°C for from 5 to 200 minutes.

14. An emission treatment system for treating an exhaust gas comprising NOₓ, wherein the emission treatment system comprises the catalyst article of any of claims 1 to 10.

15. A method of treating an exhaust gas comprising NOₓ, the method comprising:
providing the catalyst article of any of claims 1 to 10 or the emission treatment system of claim 14; and
contacting the exhaust gas with the catalyst article.
